# EUROPÄISCHE PATENTSCHRIFT

(11) **EP 4 545 314 B1**
(45) Veröffentlichungstag und Bekanntmachung des Hinweises auf die Patenterteilung: **22.07.2026**
(21) Anmeldenummer: 24202216.8
(22) Anmeldetag: 24.09.2024
(51) Int. Cl.: B60C 11/03, B60C 11/13

(54) **FAHRZEUGREIFEN**
VEHICLE TYRE
BANDAGE PNEUMATIQUE POUR VÉHICULES

(30) Priorität: 27.10.2023 DE 102023210695
(43) Veröffentlichungstag der Anmeldung: 30.04.2025
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- JP-A- 2000 343 916
- KR-A- 20030 046 200
- US-A1- 2016 332 491
- US-A1- 2023 339 269

## Beschreibung

Die Erfindung betrifft einen Fahrzeugreifen mit einem Laufstreifen mit Profilpositiven, beispielsweise Stollen, sowie mit Profilpositive begrenzenden oder in Profilpositive hinein verlaufenden Rillen, die einen U- oder V- förmigen Querschnitt mit Rillenflanken und mit einem Rillengrund aufweisen, wobei am Rillengrund von Rillen freistehende rotationssymmetrische, gerade Steinauswurfkörper mit kreisförmigen Basisflächen oder freistehende drehsymmetrische gerade Steinauswurfkörper mit polygonalen Basisflächen ausgebildet sind, wobei die Basisflächen bzw. Umkreise der Basisflächen jeweils einen Durchmesser aufweisen, welcher höchstens der Breite des Rillengrundes der jeweiligen Rille entspricht.

Ein derartiger Fahrzeugreifen ist beispielsweise aus der US 2016/0332491 A1 bekannt. Dieser Fahrzeugreifen weist einen Laufstreifen mit Umfangsrillen auf, auf deren Rillengründen freistehende, insgesamt verrundete Steinauswurfkörper ausgebildet sind. Gemäß einem Ausführungsbeispiel sind die Steinauswurfkörper als Kugelsegmente gestaltet und weisen ein Basisfläche mit einem Durchmesser auf, welcher kleiner ist als die Breite des Rillengrundes.

Aus der KR 2003 0046200 A ist ein Nutzfahrzeugreifen mit einem Laufstreifen mit Umfangsrillen bekannt, auf deren Rillengründen von den Rillenflanken beabstandete Steinauswurfkörper in Form von geraden Kreiszylindern ausgebildet sind, wobei die Steinauswurfkörper über schmale, quaderförmige Stege miteinander verbunden sind.

Die JP 2000 343 916 A offenbart einen Fahrzeugreifen mit einem Laufstreifen mit einer die Profilierung enthaltenden Laufstreifencap aus einem elektrisch nicht leitenden Gummimaterial und einer Laufstreifenbase aus einem elektrisch leitenden Gummimaterial, sowie mit einer Umfangsrille, in welcher freistehende kegelstumpfförmige Erhebungen ausgebildet sind. Die Erhebungen weisen einen mit der Laufstreifenbase in Verbindung stehenden inneren, aus dem Gummimaterial der Laufstreifenbase gebildeten, bis zur Laufstreifenperipherie reichenden, inneren Erhebungsteil und einem aus dem Gummimaterial der Laufstreifencap bestehenden, den radial inneren Erhebungsteil ringförmig umlaufenden, äußeren Erhebungsteil auf.

Fahrzeugreifen mit profilierten Laufstreifen mit Rillen und von Rillen begrenzten Stollen sind in unterschiedlichen Ausgestaltungen bekannt und sind beispielsweise für Fahrräder, die für den urbanen Einsatz besonders gut geeignet sind, vorgesehen. Wenn sich bei profilierten Laufstreifen der eingangs genannten Art Steine in den Rillen festsetzen, werden sie oft nicht wieder ausgeworfen. Haben sich mehrere Steine beim Fahren auf entsprechendem Untergrund in den Rillen des Laufstreifens des Reifens festgesetzt, so beeinträchtigten sie das Wasserdrainagevermögen der Rillen des Laufstreifens. Darüber hinaus erzeugen festsitzende Steine beim Abrollen des Reifens am Untergrund störende Klack-Geräusche.

Der Erfindung liegt daher die Aufgabe zugrunde, dafür zu sorgen, dass sich bei einem Fahrzeugreifen der eingangs genannten Art Steine nicht mehr oder wesentlich weniger in den Rillen des Laufstreifens festsetzen können, sodass die störenden Klack-Geräusche vermieden sind und die Funktion der Rillen zur Drainage von Wasser auf nassem Untergrund erhalten bleibt.

Gelöst wird die gestellte Aufgabe erfindungsgemäß dadurch, dass die Rillen eine größte Rillentiefe von 0,50 mm bis 6,00 mm und an der Laufstreifenperipherie eine Breite von 3,00 mm bis 6,00 mm aufweisen, wobei der Rillengrund eine Breite von 2,00 mm bis 4,00 mm aufweist, wobei der Durchmesser der Basisflächen bzw. der Umkreise der Basisflächen der Steinauswurfkörper mindestens 0,50 mm beträgt, wobei Steinauswurfkörper, die an Stellen am Rillengrund von Rillen oder Rillenabschnitten ausgebildet sind, an welchen keine Rillen einmünden, eine in radialer Richtung vom Rillengrund ermittelte Höhe aufweisen, die um 20% bis 50% geringer ist als die Höhe von Steinauswurfkörpern, die an Stellen am Rillengrund von Rillen ausgebildet sind, an welchen eine Rille in eine andere Rille einmündet.

Die gemäß der Erfindung vorgesehenen Steinauswurfkörper sorgen dafür, dass in den Rillen verfangene Steine und Steinchen beim Abrollen des Reifens am Untergrund schnell wieder ausgeworfen werden. Von besonderer Bedeutung ist in Rillen von Fahrzeugreifen der eingangs genannten Art, insbesondere bei Fahrradreifen-Laufstreifen, die besondere Ausgestaltung der Steinauswurfkörper als freistehende rotationssymmetrische, gerade Körper mit kreisförmigen Basisflächen oder als freistehende drehsymmetrische gerade Körper mit polygonalen Basisflächen. Diese Ausgestaltung sorgt für eine gute Rissbeständigkeit und eine gute Stabilität der Steinauswurfkörper und dafür, dass diese mit geringem zusätzlichen Gummimaterial ausführbar sind.

Bei Fahrzeugluftreifen für mehrspurige Kraftfahrzeuge, wie Nutzfahrzeuge, Personenkraftwagen, Vans, SUVs oder Light-Trucks, ist es schon lange bekannt, am Rillengrund von Rillen als Steinauswerfer wirkende Vorsprünge auszubilden. An die Steinauswurfkörper in Rillen von Laufstreifen derartiger Reifen werden hinsichtlich der Funktionalität, der Rissbeständigkeit und des Erhalts des Wasserdrainagevermögens auch bei hohen Geschwindigkeiten besondere Anforderungen gestellt, die eine ausgeklügelte Gestaltung und Anordnung der Steinauswurfkörper erfordern. Beispielsweise ist aus der DE 3 727 050 A1 ein Nutzfahrzeugreifen bekannt, welcher in Draufsicht zickzack-förmig verlaufende Umfangsrillen aufweist, auf deren Rillengrund Steinauswurfkörper als freistehende Vorsprünge ausgebildet sind. Zwischen den Vorsprüngen sind schmale, stegartig gestaltete Verbindungsvorsprünge ausgebildet. Bei dem aus der DE 10 2018 214 974 A1 bekannten Fahrzeugluftreifen für Personenkraftwagen sind im Laufstreifen Umfangsrillen ausgebildet, an deren Rillengrund als Steinauswurfkörper freistehende, in Richtung der Umfangsrillenerstreckung längliche Vorsprünge ausgebildet sind, welche jeweils eine Höhe von 10 % bis 30 % der Profiltiefe und eine Breite von 25 % bis 40 % der Breite der Umfangsrille aufweisen.

Bei einer bevorzugten Ausführung beträgt der Durchmesser der Basisflächen bzw. der Umkreise der Basisflächen der Steinauswurfkörper 1,50 mm bis 2,50 mm. Auf diese Weise sind die Steinauswurfkörper auf besonders vorteilhafte Weise an die Gegebenheiten in Rillen von Laufstreifen, insbesondere von Fahrradreifen oder Reifen für Leichtfahrzeuge, anpassbar.

Gemäß einer weiteren vorteilhaften und bevorzugten Ausführung weisen Steinauswurfkörper, welche am Rillengrund von Rillen oder Rillenabschnitten außerhalb von etwaigen Einmündungsstellen anderer bzw. weiterer Rillen ausgebildet sind, eine in radialer Richtung vom Rillengrund ermittelte Höhe von mindestens 0,20 mm, insbesondere 1,00 mm bis 3,00 mm und vorzugsweise von bis zu 50 % der vorliegenden größten Rillentiefe, welche die Rillentiefe bei neuem Reifen ist, auf. Derartige Steinauswurfkörper weisen ein besonders kleines Gummivolumen auf, sodass sie einen vernachlässigbaren Beitrag zum Gewicht des Reifens leisten.

Bei einer anderen vorteilhaften und bevorzugten Ausführung weisen Steinauswurfkörper, welche an Stellen am Rillengrund von Rillen ausgebildet sind, an welchen eine weitere bzw. andere Rille einmündet, einen in radialer Richtung vom Rillengrund ermittelte Höhe auf, die mindestens 0,50 mm, insbesondere 1,00 mm beträgt und höchstens der vorliegenden größten Rillentiefe, insbesondere bis zu 70 % der größten Rillentiefe, entspricht. An Kreuzungsstellen von Rillen werden daher besonders robuste und stabile Steinauswurfkörper ausgebildet, um an diesen Stellen verlässlich für ein Steinauswerfen zu sorgen.

Um auf besonders verlässliche Weise für ein Auswerfen von Steinen und Steinchen aus Rillen im Laufstreifens zu sorgen, ist es vorteilhaft, wenn Steinauswurfkörper, die am Rillengrund von Rillen oder Rillenabschnitten ausgebildet sind, in welchen keine Rillen einmünden, eine Reihe aus Steinauswurfkörpern bilden, deren gegenseitiger lichter Abstand für alle Steinauswurfkörper bevorzugt konstant ist und 10 % bis 300 % ihrer Höhe, insbesondere 50 % bis 100 % ihrer Höhe beträgt.

Besonders vorteilhaft für die steinauswerfende Wirkung der Steinauswurfkörper in Rillen von Laufstreifen, insbesondere von Laufstreifen in Fahrradreifen, ist eine Ausführung der Steinauswurfkörper als gerade Kegelstümpfe, als Kreiszylinder, als gerade Pyramidenstümpfe oder als Kugelsegmente, insbesondere höchstens Halbkugeln.

Eine vorteilhafte Ausführungsform ist dadurch gegeben, dass der Fahrzeugreifen ein Fahrzeugluftreifen ist.

Eine vorteilhafte Ausführungsform ist dadurch gegeben, dass der Fahrzeugreifen ein Fahrzeugreifen für ein Leichtfahrzeug, bevorzugt für ein Fahrrad und/oder Motorrad und/oder einen Rollstuhl, besonders bevorzugt für ein Fahrrad, ist.

Es kann sich entsprechend um einen Leichtfahrzeugreifen, bevorzugt um einen Fahrradreifen und/oder um einen Motorradreifen und/oder um einen Rollstuhlreifen, besonders bevorzugt um einen Fahrradreifen, handeln.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Rollstühle und/oder Motorräder und/oder Fahrzeuge der Fahrzeugklasse L im Sinne der EU Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb ausgelegt sein. Das Leichtfahrzeug, bevorzugt Fahrrad, kann als Lastenfahrzeug ausgelegt sein. Das Leichtfahrzeug, bevorzugt Fahrrad, kann zwei, drei, vier oder mehr Räder aufweisen.

Kraftfahrzeuge der Fahrzeugklasse L im Sinne der der EU Verordnung 168/2013 umfassen insbesondere Fahrzeuge gemäß den Klassen L1e und/oder L2e und/oder L3e und/oder L4e und/oder L5e und/oder L6e.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Draufsicht eines Umfangsabschnittes eines Laufstreifens eines Fahrradreifens,
Fig. 2 und Fig. 3 Details aus Fig. 1 in vergrößerter Darstellung,
Fig. 4 einen Querschnitt durch eine Umfangsrille entlang der Linie IV - IV der Fig. 2,
Fig. 5 einen Querschnitt durch eine Querrille entlang der Linie V - V der Fig. 3 und
Fig. 6 eine Schrägansicht eines Ausführungsbeispiels eines Steinauswurfkörpers.

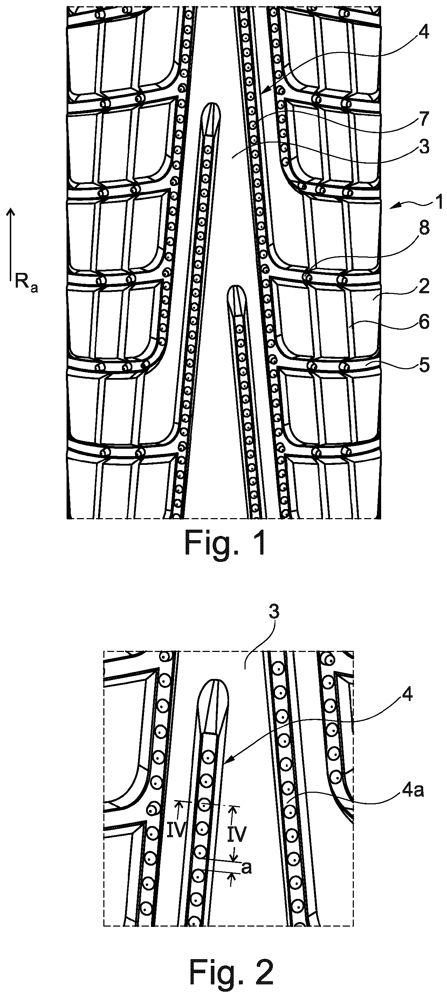

Fig. 1 zeigt einen Umfangsabschnitt eines Ausführungsbeispiels eines profilierten Laufstreifens 1 eines Fahrradreifens, dessen weitere Bestandteile, wie Seitenwände, Wulstbereiche und dergleichen, nicht dargestellt sind. Der gezeigte Laufstreifen 1 ist insbesondere für Fahrräder für den urbanen Einsatz oder für Trekking Bikes vorgesehen. Die Erfindung ist jedoch auf derartige Fahrradreifen nicht eingeschränkt und in Laufstreifen anderer Fahrzeugreifen, insbesondere Fahrzeugluftreifen, bevorzugt solche für Leichtfahrzeuge, Motorräder oder Krankenfahrstühle, einsetzbar.

Der beispielhaft gezeigte Laufstreifen 1 weist ein Stollenprofil mit jeweils drei in Umfangsrichtung umlaufenden Reihen von Stollen 2 in jeder Laufstreifenhälfte und einen vergleichsweise schmalen mittleren bzw. zentralen Laufstreifenbereich, in welchem eine als Kontaktfläche zum Untergrund wirkende den Reifen umlaufende Positivfläche 3 und gerade verlaufende Umfangsrillen 4 mit einer Längserstreckung in der Größenordnung von 12 cm bis 15 cm dominieren, auf.

Parallel zueinander verlaufende Querrillen 5 und zwischen benachbarten Querrillen 5 jeweils parallel zu den Umfangsrillen 4 verlaufende weitere Umfangsrillen 6 bewirken die erwähnte Gliederung in Stollen 2, deren Deckflächen die Kontaktflächen zum Untergrund zur Verfügung stellen. **In** jeder Laufstreifenhälfte verlaufen die Querrillen 5 zur axialen Richtung des Laufstreifens unter einem Winkel von bis zu 20°, je nach der Größe des Winkles die Querrillen 5 in der einen Laufstreifenhälfte zu den Querrillen 5 in der anderen Laufstreifenhälfte gegensinnig geneigt. Die Umfangsrillen 4 und die weiteren Umfangsrillen 6 sind jeweils gleichsinnig zu den Querrillen 5 geneigt und schließen mit der axialen Richtung jeweils einen Winkel in der Größenordnung von 95° bis 120° ein. Die am weitesten laufstreifeninnenseitig befindlichen Stollenreihen sind laufstreifeninnenseitig von je einer der langgestreckten Umfangsrillen 4 begrenzt, die beim gezeigten Beispiel nach jedem in Umfangsrichtung vierten Stollen 2 in den zentralen Laufstreifenbereich 3 frei hineinverläuft. Der betreffende vierte Stollen 2 setzt sich daher jeweils als langgestreckter Teilbereich des zentralen Laufstreifenbereichs 3 fort.

Der geschilderte Verlauf der Querrillen 5, der weiteren Umfangsrillen 6 und der Umfangsrillen 4 bewirkt, dass der Laufstreifen 1 laufrichtungsgebunden gestaltet ist, wobei die Abrollrichtung des Reifens bei Vorwärtsfahrt durch den Pfeil Rₐ in Fig. 1 gekennzeichnet ist. Der Fahrradreifen ist daher am Fahrrad entsprechend zu montieren.

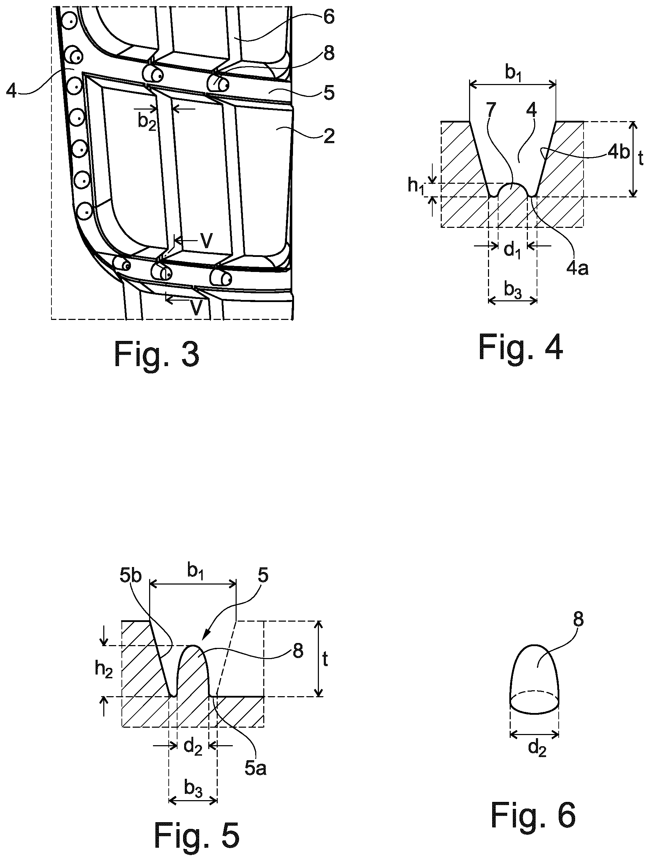

Wie Fig. 4 und Fig. 5 zeigen, weisen die Umfangsrillen 4, 6 und die Querrillen 5 jeweils eine in radialer Richtung ermittelte größte Rillentiefe t (welche der Profiltiefe bei Neureifen entspricht) von 0,50 mm bis 6,00 mm, insbesondere von 1,50 mm bis 4,00 mm, auf. An der Laufstreifenperipherie weisen die Umfangsrillen 4 und die Querrillen 5 bei neuem Reifen eine Breite b₁ von 3,00 mm bis 6,00 mm, die Umfangsrillen 6 eine Breite b₂ (Fig. 3) von 2,00 mm bis 4,00 mm auf. Im radialen Querschnitt betrachtet (Fig. 4, Fig. 5) weisen sowohl die Umfangsrillen 4 als auch die Querrillen 5 einen U-förmigen Querschnitt mit weitgehend eben verlaufende Rillengründen 4a und 5a und mit und gering nach außen geneigt verlaufenden Rillenflanken 4b und 5b entlang der Profilpositive auf, wobei die Rillenflanken 4b und 5b unter einem Neigungswinkel von 2° bis zu 10° relativ zur radialen Richtung verlaufen und mittels Übergangsrundungen in den jeweiligen Rillengrund 4a, 5a übergehen. Die Rillengründe 4a der Umfangsrillen 4 und die Rillengründe 5a der Querrillen 5 besitzen jeweils eine Breite b₃, die um mindestens 0,10 mm und bis zu bis 1,50 mm geringer ist als die Breite b₁ der Umfangsrillen 4 bzw. Querrillen 5.

Wie insbesondere Fig. 1, Fig. 2 und Fig. 3 zeigen, sind mittig am Rillengrund 4a der Umfangsrillen 4 Steinauswurfkörper 7 (nur in Fig. 1 bezeichnet) ausgebildet, die bei der bevorzugten und dargestellten Ausführung kuppelförmig, insbesondere als Kugelsegmente, jedoch höchstens als Halbkugeln, gestaltet sind und daher kreisförmige Basisflächen aufweisen. Gemäß Fig. 4 weisen die Basisflächen einen Durchmesser d₁ auf, welcher höchstens der Breite b₃ des Rillengrundes 4a der Umfangsrille 4 entspricht, mindestens 0,50 mm und insbesondere 1,50 mm bis 2,50 mm beträgt. Die Steinauswurfkörper 7 sind freistehende, nicht an die Rillenflanken 4b angebundene Vorsprünge am Rillengrund 4a. Die Höhe h₁ der Steinauswurfkörper 7 beträgt mindestens 0,20 mm, insbesondere 1,00 mm bis 3,00 mm, und insbesondere höchstens 50%, der vorliegenden Rillen- bzw. Profiltiefe, ermittelt vom Niveau des Rillengrundes 4a aus. In jeder Umfangsrille 4 befindet sich eine Reihe aus Steinauswurfkörpern 7, deren gegenseitiger lichter Abstand a (Fig. 2) für alle Steinauswurfkörper 7 innerhalb einer Umfangsrille 4 bevorzugt konstant ist und 10 % bis 300 % ihrer Höhe h₁, insbesondere 50 % bis 100 %, ihrer Höhe h₁ beträgt.

Gemäß Fig. 1, Fig. 3 und Fig. 5 befinden sich weitere Steinauswurfkörper 8 am Rillengrund 5a (Fig. 5) von Querrillen 5 und zwar an Stellen, an welchen entweder eine Umfangsrille 6 oder zwei weitere Umfangsrillen 6 in die Querrille 5 einmünden (Fig. 1, Fig. 3). Bei der gezeigten bevorzugten Ausführung (siehe auch Fig. 6) sind die Steinauswurfkörper 8 gerade Kegelstümpfe mit kreisförmigen Basisflächen, deren Durchmesser d₂ (Fig. 5, Fig. 6) höchstens der Breite b₃ (Fig. 4, Fig. 5) des Rillengrundes 5a der Querrillen 5 entspricht, mindestens 0,5 mm und insbesondere 1,50 mm bis 2,50 mm beträgt. Die Steinauswurfkörper 8 weisen eine Höhe h₂ (Fig. 5) auf, die bei den seichtesten Rillen 5 mit einer Rillentiefe von 0,50 mm der Rillentiefe entspricht, wobei 0,50 mm überhaupt die Mindesthöhe ist. Bei Querrillen 5 größerer Rillentiefe ist die Höhe h₂ der Steinauswurfkörper 8 bis zu 100 %, insbesondere bis zu 70%, der vorliegenden Rillen- bzw. Profiltiefe, ermittelt vom Niveau des Rillengrundes 5a aus.

Bei alternativen Ausführungen sind die Steinauswurfkörper 7, 8 als sonstige rotationssymmetrische Körper mit kreisförmiger Basisfläche oder als gerade drehsymmetrische Körper mit einer polygonalen Basisfläche, beispielsweise als Pyramidenstümpfe, gestaltet, wobei bevorzugt solche Körper gewählt werden, deren Querschnittsflächen, parallel zur Basisfläche betrachtet, mit zunehmender Höhe abnehmen.

Steinauswurfkörper 7 können auch in Querrillen, Schrägrillen oder Diagonalrillen eines Laufstreifens, Steinauswurfkörpern 8 an beliebigen Rillenkreuzungen, etwa an Rillenkreuzungen von Querrillen und Umfangsrillen, ausgebildet sein und derart auch anstelle eines Steinauswurfkörpers 7 positioniert sein.

Die Erfindung ist nicht auf die beispielhaft ausgeführten Fahrzeugreifen beschränkt. Erfindungsgemäß ausgeführte Reifen können Fahrzeugluftreifen, bevorzugt Leichtfahrzeugreifen, besonders bevorzugt Motorradreifen und/oder Fahrradreifen und/oder Rollstuhlreifen, sein.

### Bezugszeichenliste

- 1: Laufstreifen
- 2: Stollen
- 3: Positivfläche
- 4: Umfangsrille
- 4a: Rillengrund
- 4b: Rillenflanke
- 5: Querrille
- 5a: Rillengrund
- 5b: Rillenflanke
- 6: Umfangsrille
- 7, 8: Steinauswurfkörper
- a: Abstand
- b₁: Breite (Umfangsrille 4, Querrille 5)
- b₂: Breite (Umfangsrille 6)
- b₃: Breite (Rillengrund 4a, 5a)
- d₁: Durchmesser(Steinauswurfkörper 7)
- d₂: Durchmesser(Steinauswurfkörper 8)
- h₁: Höhe (Steinauswurfkörper 7)
- h₂: Höhe (Steinauswurfkörper 8)
- Rₐ: Abrollrichtung bei Vorwärtsfahrt
- t: größte Rillentiefe

## Patentansprüche

1. Fahrzeugreifen mit einem Laufstreifen (1) mit Profilpositiven, beispielsweise Stollen (2), sowie mit Profilpositive begrenzenden oder in Profilpositive hinein verlaufenden Rillen (4, 5), die einen U- oder V- förmigen Querschnitt mit Rillenflanken (4b, 5b) und mit einem Rillengrund (4a, 5a) wobei am Rillengrund (4a, 5a) von Rillen (4, 5) freistehende rotationssymmetrische, gerade Steinauswurfkörper (7, 8) mit kreisförmigen Basisflächen oder freistehende drehsymmetrische gerade Steinauswurfkörper mit polygonalen Basisflächen ausgebildet sind, wobei die Basisflächen bzw. Umkreise der Basisflächen jeweils einen Durchmesser (d₁, d₂) aufweisen, welcher höchstens der Breite (b₃) des Rillengrundes (4a, 5a) der jeweiligen Rille (4, 5) entspricht,
**dadurch gekennzeichnet,**
**dass** die Rillen (4, 5) eine größte Rillentiefe (t) von 0,50 mm bis 6,00 mm und an der Laufstreifenperipherie eine Breite (b₁) von 3,00 mm bis 6,00 mm aufweisen, wobei der Rillengrund (4a, 5a) eine Breite (b₃) von 2,00 mm bis 4,00 mm aufweist, wobei der Durchmesser (d₁, d₂) der Basisflächen bzw. der Umkreise der Basisflächen der Steinauswurfkörper (7, 8) mindestens 0,50 mm beträgt,
wobei Steinauswurfkörper (7), die an Stellen am Rillengrund (4a) von Rillen (4) oder Rillenabschnitten ausgebildet sind, an welchen keine Rillen einmünden, eine in radialer Richtung vom Rillengrund (4a) ermittelte Höhe (h₁) aufweisen, die um 20% bis 50% geringer ist als die Höhe (h₂) von Steinauswurfkörpern (8), die an Stellen am Rillengrund von Rillen ausgebildet sind, an welchen eine Rille (5, 6) in eine andere Rille (4, 5) einmündet.

2. Fahrzeugreifen nach Anspruch 1, **dadurch gekennzeichnet, dass** der Durchmesser (d₁, d₂) der Basisflächen bzw. der Umkreise der Basisflächen der Steinauswurfkörper (7, 8) 1,50 mm bis 2,50 mm beträgt.

3. Fahrzeugreifen nach Anspruch 1 oder 2, **dadurch gekennzeichnet, dass** Steinauswurfkörper (7), welche am Rillengrund (4a) von Rillen (4) oder Rillenabschnitten außerhalb von etwaigen Einmündungsstellen weiterer Rillen ausgebildet sind, eine in radialer Richtung vom Rillengrund (4a) ermittelte Höhe (h₁) von mindestens 0,20 mm, insbesondere 1,00 mm bis 3,00 mm und vorzugsweise von bis zu 50% der vorliegenden größten Rillentiefe (t) aufweisen.

4. Fahrzeugreifen nach einem der Ansprüche 1 bis 3, **dadurch gekennzeichnet, dass** Steinauswurfkörper (8), welche an Stellen am Rillengrund (4a, 5a) von Rillen (4, 5) ausgebildet sind, an welchen eine andere Rille (4, 5) einmündet, eine in radialer Richtung vom Rillengrund (4a, 5a) ermittelte Höhe (h₂) aufweisen, die mindestens 0,50 mm, insbesondere mindestens 1,0 mm beträgt und höchstens der vorliegenden größten Rillentiefe (t), insbesondere bis zu 70% der größten Rillentiefe (t), entspricht.

5. Fahrzeugreifen nach einem der Ansprüche 1 bis 4, **dadurch gekennzeichnet, dass** Steinauswurfkörper (7), die am Rillengrund (4a) von Rillen (4) oder Rillenabschnitten ausgebildet sind, in welche keine Rillen einmünden, eine Reihe aus Steinauswurfkörpern (7) bilden, deren gegenseitiger lichter Abstand (a) für alle Steinauswurfkörper (7) bevorzugt konstant ist und 10 % bis 300 %, insbesondere 50 % bis 100 %, ihrer Höhe (h₁) beträgt.

6. Fahrzeugreifen nach einem der Ansprüche 1 bis 5, **dadurch gekennzeichnet, dass** die Steinauswurfköper (7, 8) als gerade Kegelstümpfe, als Kreiszylinder, als gerade Pyramidenstümpfe oder als Kugelsegmente, insbesondere höchstens als Halbkugeln, ausgebildet sind.

7. Fahrzeugreifen nach einem der Ansprüche 1 bis 6, **dadurch gekennzeichnet, dass** es sich um einen Fahrzeugluftreifen handelt.

8. Fahrzeugreifen nach einem der Ansprüche 1 bis 7, **dadurch gekennzeichnet, dass** es sich um einen Leichtfahrzeugreifen, bevorzugt um einen Motorradreifen oder um einen Rollstuhlreifen oder um einen Fahrradreifen, handelt.

9. Fahrzeugreifen nach einem der Ansprüche 1 bis 8, **dadurch gekennzeichnet, dass** es sich um einen Fahrradreifen handelt.

## Claims

1. Vehicle tyre with a tread (1) with profile positives, for example lugs (2), and with grooves (4, 5) which delimit profile positives or extend into profile positives and have a U-shaped or V-shaped cross section with groove flanks (4b, 5b), and with a groove base (4a, 5a), wherein configured on the groove base (4a, 5a) of grooves (4, 5) are free-standing rotationally symmetrical, straight stone ejector elements (7, 8) with circular base areas, or free-standing rotationally symmetrical, straight stone ejector elements with polygonal base areas, wherein the base areas or perimeters of the base areas each have a diameter (d₁, d₂) which corresponds at most to the width (b₃) of the groove base (4a, 5a) of the respective groove (4, 5),
**characterized**
**in that** the grooves (4, 5) have a maximum groove depth (t) of 0.50 mm to 6.00 mm, and a width (b₁) of 3.00 mm to 6.00 mm at the tread periphery,
wherein the groove base (4a, 5a) has a width (b₃) of 2.00 mm to 4.00 mm, wherein the diameter (d₁, d₂) of the base areas, or of the perimeters of the base areas, of the stone ejector elements (7, 8) is at least 0.50 mm,
wherein stone ejector elements (7) that are configured at locations on the groove base (4a) of grooves (4) or groove portions where no grooves converge have a height (h₁), determined in the radial direction from the groove base (4a), which is 20% to 50% less than the height (h₂) of stone ejector elements (8) that are configured at locations on the groove base of grooves where one groove (5, 6) opens out into another groove (4, 5).

2. Vehicle tyre according to Claim 1, **characterized in that** the diameter (d₁, d₂) of the base areas, or of the perimeters of the base areas, of the stone ejector elements (7, 8) is 1.50 mm to 2.50 mm.

3. Vehicle tyre according to Claim 1 or 2, **characterized in that** stone ejector elements (7) that are configured on the groove base (4a) of grooves (4) or groove portions outside any convergence points of further grooves have a height (h₁), determined in the radial direction from the groove base (4a), of at least 0.20 mm, in particular 1.00 mm to 3.00 mm, and preferably of up to 50% of the greatest groove depth (t) present.

4. Vehicle tyre according to one of Claims 1 to 3, **characterized in that** stone ejector elements (8) that are configured at locations on the groove base (4a, 5a) of grooves (4, 5) where another groove (4, 5) converges have a height (h₂), determined in the radial direction from the groove base (4a, 5a), which is at least 0.50 mm, in particular at least 1.0 mm, and corresponds at most to the greatest groove depth (t) present, in particular to up to 70% of the greatest groove depth (t).

5. Vehicle tyre according to one of Claims 1 to 4, **characterized in that** stone ejector elements (7) that are configured on the groove base (4a) of grooves (4) or groove portions where no grooves converge form a series of stone ejector elements (7) of which the mutual clearance (a) for all stone ejector elements (7) is preferably constant and is 10% to 300%, in particular 50% to 100%, of their height (h₁).

6. Vehicle tyre according to one of Claims 1 to 5, **characterized in that** the stone ejector elements (7, 8) are configured as straight truncated cones, as circular cylinders, as straight truncated pyramids, or as spherical segments, in particular at most as hemispheres.

7. Vehicle tyre according to one of Claims 1 to 6, **characterized in that** it is a pneumatic vehicle tyre.

8. Vehicle tyre according to one of Claims 1 to 7, **characterized in that** it is a light-duty vehicle tyre, preferably a motorcycle tyre or a wheelchair tyre or a bicycle tyre.

9. Vehicle tyre according to one of Claims 1 to 8, **characterized in that** it is a bicycle tyre.

## Revendications

1. Pneu de véhicule avec une bande de roulement (1) avec des sculptures en relief, par exemple des crampons (2), ainsi qu'avec des rainures (4, 5) de délimitation avec des sculptures en relief ou s'étendant dans des sculptures en relief, qui comportent une section transversale en U ou en V avec des flancs de rainure (4b, 5b) et avec un fond de rainure (4a, 5a), des corps d'éjection de pierre (7, 8) séparés, symétriques en rotation, rectilignes avec des surfaces de base circulaires ou des corps d'éjection de pierre séparés, symétriques en rotation, rectilignes avec des surfaces de base polygonales étant formés sur le fond de rainure (4a, 5a) de rainures (4, 5), les surfaces de base ou les circonférences des surfaces de base comportant chacun un diamètre (d₁, d₂), qui correspond au maximum à la largeur (b₃) du fond de rainure (4a, 5a) de la rainure (4, 5) respective,
**caractérisé en ce**
**que** les rainures (4, 5) comportent une profondeur maximale de rainure (t) de 0,50 mm à 6,00 mm et une largeur (b₁) de 3,00 mm à 6,00 mm sur la périphérie de bande de roulement,
le fond de rainure (4a, 5a) comportant une largeur (b₃) de 2,00 mm à 4,00 mm, le diamètre (d₁, d₂) des surfaces de base ou des circonférences des surfaces de base des corps d'éjection de pierre (7, 8) étant égal au moins à 0,50 mm,
des corps d'éjection de pierre (7), qui sont formés sur des emplacements sur le fond de rainure (4a) de rainures (4) ou de sections de rainure, sur lesquels aucune rainure ne débouche, comportant une hauteur (h₁) déterminée dans la direction radiale à partir du fond de rainure (4a), qui est inférieure de 20 % à 50 % à la hauteur (h₂) de corps d'éjection de pierre (8), qui sont formés sur des emplacements sur le fond de rainure de rainures, sur lesquels une rainure (5, 6) débouche dans une autre rainure (4, 5).

2. Pneu de véhicule selon la revendication 1, **caractérisé en ce que** le diamètre (d₁, d₂) des surfaces de base ou des circonférences des surfaces de base des corps d'éjection de pierre (7, 8) va de 1,50 mm à 2,50 mm.

3. Pneu de véhicule selon la revendication 1 ou 2, **caractérisé en ce que** des corps d'éjection de pierre (7), qui sont formés sur le fond de rainure (4a) de rainures (4) ou de sections de rainure à l'extérieur de tout emplacement d'embouchure d'autres rainures, comportent une hauteur (h₁) d'au moins 0,20 mm déterminée dans la direction radiale depuis le fond de rainure (4a), en particulier de 1,00 mm à 3,00 mm et de préférence jusqu'à 50 % de la présente profondeur de rainure (t) la plus grande.

4. Pneu de véhicule selon l'une des revendications 1 à 3, **caractérisé en ce que** des corps d'éjection de pierre (8), qui sont formés sur des emplacements sur le fond de rainure (4a, 5a) de rainures (4, 5), sur lesquels débouche une autre rainure (4, 5), comportent une hauteur (h₂) déterminée dans la direction radiale depuis le fond de rainure (4a, 5a), qui est égale au moins à 0,50 mm, en particulier à au moins 1,0 mm, et qui correspond au maximum à la profondeur de rainure (t) présente la plus grande, en particulier jusqu'à 70 % de la profondeur de rainure (t) la plus grande.

5. Pneu de véhicule selon l'une des revendications 1 à 4, **caractérisé en ce que** des corps d'éjection de pierre (7), qui sont formés sur le fond de rainure (4a) de rainures (4) ou de sections de rainure, dans lesquels aucune rainure ne débouche, forment une rangée de corps d'éjection de pierre (7), dont l'écartement mutuel (a) de tous les corps d'éjection de pierre (7) est de préférence constant et va de 10 % à 300 %, en particulier de 50 % à 100 %, de leur hauteur (h₁).

6. Pneu de véhicule selon l'une des revendications 1 à 5, **caractérisé en ce que** les corps d'éjection de pierre (7, 8) sont réalisés sous la forme de cônes tronqués droits, de cylindres circulaires, de troncs de pyramide droits ou de segments sphériques, en particulier au plus sous la forme de demi-sphères.

7. Pneu de véhicule selon l'une des revendications 1 à 6, **caractérisé en ce qu'**il s'agit d'un pneumatique de véhicule.

8. Pneu de véhicule selon l'une des revendications 1 à 7, **caractérisé en ce qu'**il s'agit d'un pneu de véhicule léger, de manière préférée d'un pneu de motocyclette ou d'un pneu de fauteuil roulant ou d'un pneu de bicyclette.

9. Pneu de véhicule selon l'une des revendications 1 à 8, **caractérisé en ce qu'**il s'agit d'un pneu de bicyclette.
